# EUROPEAN PATENT APPLICATION

(11) **EP 1 437 265 A1**
(43) Date of publication of application: **14.07.2004**
(21) Application number: 03258254.6
(22) Date of filing: 31.12.2003
(51) Int. Cl.: B60R 21/045

(54) **Impact energy absorber**

(30) Priority: 08.01.2003 JP 2003001653
(71) Applicant: Ohtsuka Co., Ltd., Shinagawa-ku Tokyo (JP)
(72) Inventor: Shimoda, Akio c/o Ohtsuka Co., Ltd., Tokyo (JP)
(74) Representative: Goddard, Frances Anna

(57) **Abstract**

An object of the present invention is to provide an impact energy absorber (1) which is easy to manufacture and low in cost and absorbs high impact energy. The impact energy absorber (1) consists of an aggregate formed by lapping a kraft paper on the outside (4) and inside (2) of a metal sheet (3) such as a hard aluminium foil, and is a flexible pipe having a circular cross-sectional shape and formed with concave and convex portions in a spiral form on the surface thereof. The outside diameter of the impact energy absorber (1) is 20 to 50 mm, the pitch of the concave and convex portions is 1.4 to 2.0 mm, and the vertical width of the concave and convex portions is 2.3 to 3.2 mm.. Energy is absorbed by plastic deformation in the radial direction of the energy absorber (1).

## Description

### 1. Field of the Invention

The present invention relates to an impact energy absorber, in particular, although not exclusively, for absorbing an impact load applied to an automotive body or the like.

### 2. Description of Related Art

A conventional impact energy absorber used for a motor vehicle is a pipe-shaped element having a circular cross section, and is disposed between an automotive body panel and a cabin interior panel. The impact energy absorber is constructed so that if an unexpected accident occurs when the motor vehicle is running and hence the passenger hits against the body panel, the aforementioned circular pipe is collapsed and plastically deformed, by which the impact energy is absorbed.

However, the pipe-shaped impact energy absorber with a circular cross section cannot absorb high impact energy.

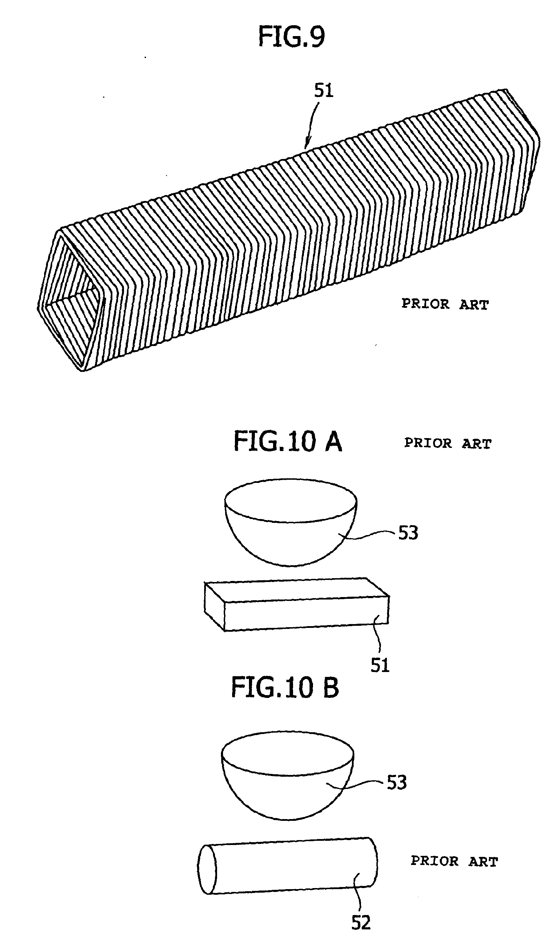

Thereupon, an impact energy absorber capable of absorbing high impact energy, as shown in FIG. 9, has been developed (see Japanese Patent Provisional Publication No. 10-029482 (No. 029482/1998)).

This energy absorber 51 is constructed so that kraft papers are lapped on the outside and inside of an aluminum foil, which is an intermediate layer material, these materials are formed into a pipe shape, and spiral corrugated portions are formed with equal pitches in a peripheral wall portion to provide flexibility. The energy absorber 51 is formed so as to have a square or rectangular cross-sectional shape (hereinafter, this energy absorber is referred to as a rectangular energy absorber).

To investigate the characteristics of the energy absorber formed as described above, an experiment as shown in FIG. 10 was conducted.

FIG. 10A shows a case where the above-described rectangular impact energy absorber 51 is used, and FIG. 10B shows a case where an impact energy absorber 52 having a circular cross section is used as a comparative example. The energy absorber 52 is a flexible pipe having a cross section of a perfect circle, in which the outside diameter thereof is the same dimension as the outside width of one side of the rectangular energy absorber 51, and the axial length, the thickness of intermediate layer material and the like, the pitch and the number of turns of spiral shape are also the same as those of the rectangular energy absorber 51.

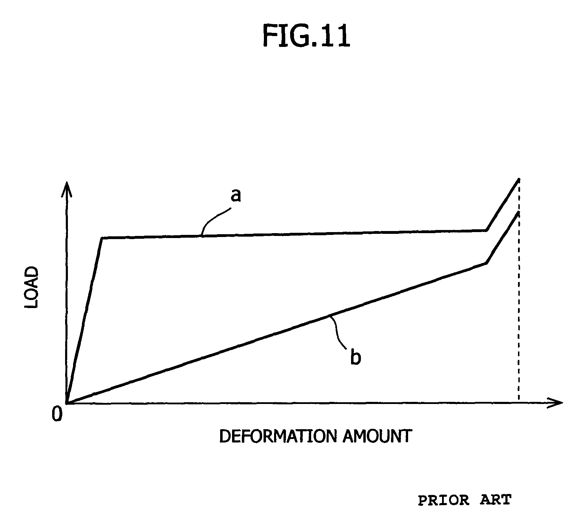

These energy absorbers 51 and 52 were compressed by the tip end of a hemisphere 53 with a diameter of 165 mm by using a compression testing machine, and a deformation amount was measured by the dimension of inside diameter. The compression rate was 100 mm/min. The test results are shown in FIG. 11. In the figure, solid line a indicates the test result of the rectangular energy absorber 51, and solid line b indicates the test result of the circular energy absorber 52. As shown in FIG. 11, the deformation amount of the rectangular energy absorber 51 is small at high loads from the early stage as compared with the circular energy absorber 52, that is, the rectangular energy absorber 51 efficiently absorbs energy due to an external force at the early stage of deformation, so that solid line a shows a substantially rectangular shape. When a load higher than a fixed value is applied, the deformation amount increases suddenly. On the other hand, for the circular energy absorber 52, the deformation amount increases linearly in proportion to load as indicated by the solid line b.

It was found that the deformation mode suitable for performance as an impact energy absorber is where, as in the case of the rectangular energy absorber 51, the deformation amount is small at high loads from the early stage, and when a load higher than a fixed value is applied, the deformation amount increases suddenly.

### SUMMARY OF THE INVENTION

Nowadays, motor vehicles that are provided with the above-described impact energy absorbers to protect the passenger's head are increasing in number. In particular, in North America, FMVSS201 (Federal Motor Vehicle Safety Standard No. 201) regulation, which is a testing method for protecting passengers from shock in a cabin, came into force in September of 2002, and thus all motor vehicles have been obligated to be provided with the impact energy absorbers.

Also, the rectangular impact energy absorber tends to be disposed in not only a front roof but also a side roof, a rear roof, and other various portions. Therefore, the demand for it is increasing not only on the continent of North America but also in Japan.

However, the rectangular impact energy absorber must be formed into a rectangular shape after an energy absorber having a circular cross section has been manufactured. Therefore, special equipment and technology are needed, and much time and labor are consumed, which leads to a high manufacturing cost for the energy absorber.

Also, the rectangular impact energy absorber has a directional property such that when a load is applied in the direction perpendicular to the opposed surfaces, high impact energy is absorbed, but when a load is applied in the diagonal direction, the performance is inferior.

The present invention has been made in view of the above situation, and accordingly preferred embodiments of the present invention seek to provide an impact energy absorber that is lower in cost and easier to manufacture than the rectangular impact energy absorber, can absorb high energy like the rectangular impact energy absorber, and can provide its performance even if a load is applied from a direction over a wide angle range.

The present invention provides an impact energy absorber having flexibility, which is a circular pipe formed by lapping band-shaped materials in a spiral form and formed with concave and convex portions in a circumferential portion in a spiral or annular form, the pipe including an aluminum band material with a thickness of 0.07 to 0.12 mm, the vertical width of the concave and convex portions being 2.0 to 3.2 mm, and the pitch of the concave and convex portions being 1.4 to 2.0 mm, to absorb energy by plastic deformation of the flexible pipe when impact energy is applied.

Also, the present invention provides an impact energy absorber having flexibility, which is a circular pipe formed by lapping band-shaped materials in a spiral form and formed with concave and convex portions in a circumferential portion in a spiral or annular form, and is disposed between a body panel and an interior member of a motor vehicle, the pipe including an aluminum band material with a thickness of 0.07 to 0.12 mm, the vertical width of the concave and convex portions being 2.0 to 3.2 mm, and the pitch of the concave and convex portions being 1.4 to 2.0 mm, to absorb energy by plastic deformation of said flexible pipe when impact energy is applied.

In each of the above-described aspects of the invention, the flexible pipe may be formed by lapping a kraft paper on the outside and inside of a band-shaped aluminium foil and by winding these materials. The kraft paper may have an arbitrary, appropriate thickness, for example, a thickness of 0.2 mm. The pipe may comprise an aluminium band material with a thickness of 0.10 to 0.12 mm, the vertical width of said concave and convex portions being 2.3 to 3.2 mm, the pitch of said concave and convex portions being 1.5 to 1.7 mm, and the outside diameter being 20 to 30 mm, to absorb energy by plastic deformation of said flexible pipe.

As described above, it has been recognised that a conventional impact energy absorber having a circular cross section has a linear relationship between load and deformation amount in the load performance test. The inventor found that the circular impact energy absorber in accordance with the present invention has the same relationship between load and deformation amount as that of the rectangular impact energy absorber in the load performance test under specific conditions, that is, by increasing the apparent thickness of energy absorber and by specifying the vertical width and pitch of the concave and convex portions.

### BRIEF DESCRIPTION OF THE DRAWINGS

The present invention will now be described, by way of example only, with reference to the following drawings, in which:-
FIG. 1 is a perspective view of an impact energy absorber in accordance with an embodiment of the present invention.
FIG. 2A is a front view of the impact energy absorber shown in FIG. 1, viewed from the axial direction, FIG. 2B is a side view thereof, viewed from a circumferential direction, and FIG. 2C is an enlarged sectional view of a portion indicated by arrow mark X in FIG. 2B;
FIG. 3 is a side view of a setup for a dynamic load characteristic test for an impact energy absorber in conformity with FMVSS201 regulations;
FIG. 4 is a graph showing the results (examples 1 to 3) of the dynamic load characteristic test shown in FIG. 3;
FIG. 5 is a perspective view showing a state in which impact energy absorbers in accordance with the present invention are disposed in a motor vehicle;
FIG. 6 is a sectional view taken along the line E-E of FIG. 5, showing an impact energy absorber disposed in a front roof rail portion;
FIG. 7 is a sectional view taken along the line F-F of FIG. 5, showing an impact energy absorber disposed in a side roof rail portion;
FIG. 8 is a sectional view taken along the line G-G of FIG. 5, showing an impact energy absorber disposed in a rear header rail portion;
FIG. 9 is a perspective view of a conventional, prior art, impact energy absorber having a rectangular cross-section;
FIG. 10A is a perspective view showing a load test for a conventional, prior art, impact energy absorber having a rectangular cross section, and FIG. 10B is a perspective view showing a load test for a conventional, prior art, impact energy absorber having a circular cross section; and
FIG. 11 is a graph showing the result of the load test shown in FIG. 10.

### DETAILED DESCRIPTION OF PREFERRED EMBODIMENTS

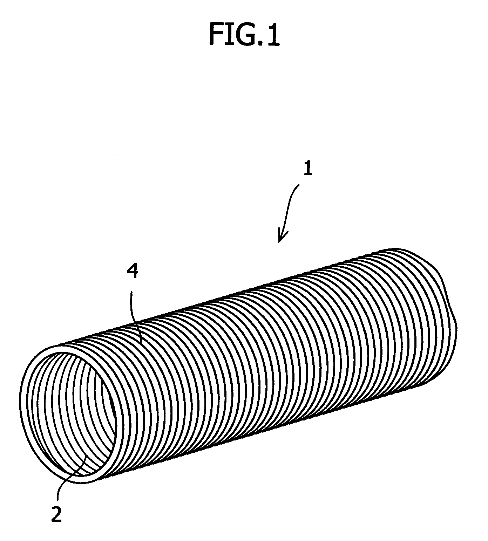

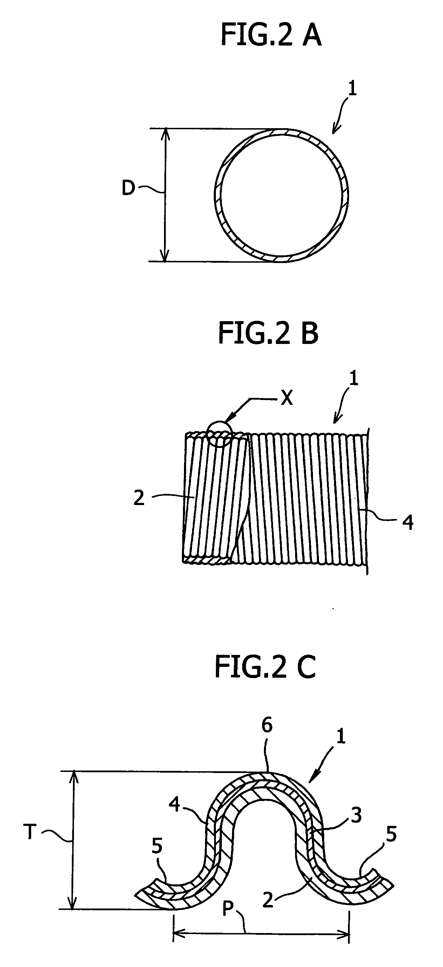

An impact energy absorber in accordance with an embodiment of the present invention will now be described with reference to the accompanying drawings. FIGS. 1 and 2 show an impact energy absorber 1 in accordance with the present invention. FIG. 1 is a perspective view of the energy absorber 1, FIG. 2A is a front view of the pipe-shaped energy absorber 1, viewed from an axial direction, FIG. 2B is a partially broken side view thereof, viewed from a circumferential direction, and FIG. 2C is an enlarged sectional view of a portion indicated by arrow mark X in FIG. 2B.

This energy absorber 1 is a flexible pipe having a circular cross section. The energy absorber 1 consists of three layers of an inner layer material 2, an intermediate layer material 3, and an outer layer material 4 in that order from the inside. As the inner layer material 2 and the outer layer material 4, a kraft paper is used, and as the intermediate layer material, a metal sheet, for example, iron foil or aluminum foil is used. In this embodiment, as the intermediate layer material, a hard aluminum foil is used. The inner layer material 2, the intermediate layer material 3, and the outer layer material 4 are formed by winding band-shaped materials in a spiral form. On these layer materials 2 to 4 which are lapped on each other, a concave portion 5 and a convex portion 6 are formed continuously in a corrugated form in the axial direction, and the concave portion 5 and the convex portion 6 are formed so as to be spiral. Therefore, the energy absorber 1 can be formed so as to extend in the axial direction according to the length of each material. Also, the energy absorber 1 can be cut to an appropriate length. Such an energy absorber can easily be bent at an angle larger than 90 degrees or into an S shape.

The requirements for occurrence of rectangular wave characteristics of the impact energy absorber 1 are as follows: the outside diameter D of the impact energy absorber 1 is 20 to 50 mm, the pitch p from the valley of the concave portion 5 to the valley of the adjacent concave portion 5 is 1.4 to 2 mm, and the vertical width (apparent thickness, see FIG. 2C) T of the concave and convex portions 5 and 6 is 2.3 to 3.2 mm.

As the intermediate layer material 3, a band-shaped foil with a thickness of 0.07 to 0.12 mm and a width of 28 to 45 mm is used. The number of band-shaped foils for the intermediate layer material 3 may be one, or may be two or three lapped on each other. The intermediate layer material 3 is formed by overlapping the end portions of band-shaped foils with each other by about 5 mm when the foil is wound. The preferred thickness of the intermediate layer material 3 before the concave and convex portions 5 and 6 are formed is 0.1 to 0.3 mm.

For the inner layer material 2 and the outer layer material 4, a kraft paper with a thickness (thickness before the concave and convex portions 5 and 6 are formed) of 0.2 to 0.4 mm and a width of 48 to 60 mm is used.

The requirements for occurrence of rectangular wave characteristics of the impact energy absorber 1 are given in Table 1.

**Table 1**

| **Size (outside diameter)** | **Corrugate pitch** | **Apparent tube thickness (T)** | **Al foil** | **Number of Al foils** | **Kraft paper** |
|---|---|---|---|---|---|
| **Ø20 - Ø50** | **1.4mm - 2.0mm** **(50 to 70 peaks / L100)** | **2.0mm - 3.2mm** | **t0.07mm - t0.12mm** **w28mm - w45mm** | **1 to 3** | **t0.2mm** **w48mm - w80mm** |
| Note: "50 to 70 peaks / L100" means that 50 to 70 convex portions or concave portions are formed for a distance of 100 mm. | | | | | |

### [Examples]

Next, the characteristics of the above-described impact energy absorber having a circular cross section will be described.

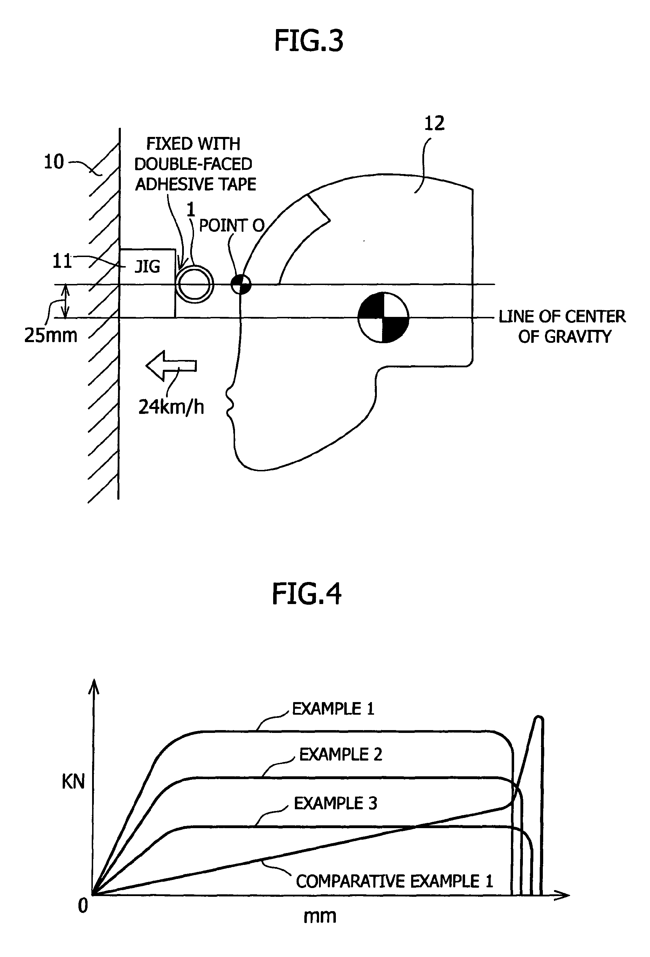

FIG. 3 shows a setup for a dynamic load characteristic test for the above-described impact energy absorber in conformity with FMVSS201 regulations. In this setup, a jig 11 of a square shape in cross section is fixed on a wall 10, and the energy absorber 1 is fixed to the jig 11 by fixing means such as a double-faced adhesive tape. Point O (forehead) at a position 25 mm higher than the center of gravity of a dummy 12, which is analogous to the shape of human head, is caused to collide with the energy absorber 1 at a speed of 24 km/h.

As a test subject for performance test, four types were used as shown in Table 2, examples 1 to 3 and a comparative example.

**Table 2**

| **Waveform characteristics** | **Size (outside diameter)** | **Corrugate pitch (mm)** | **Apparent tube thickness (T)** | **Al foil** | **Number of Al foils** | **Kraft paper** |
|---|---|---|---|---|---|---|
| **Comparative example** | **Ø26** | **1.6** | **2.0** | **t0.10 x w35** | **2** | **t0.2 x w60** |
| **Example 1** | | **1.4** | **3.0** | **t0.12 x w35** | **2** | **t0.2 x w60** |
| **Example 2** | | **1.5** | **2.8** | **t0.12 x w35** | **2** | **t0.2 x w60** |
| **Example 3** | | **1.6** | **2.6** | **t0.12 x w35** | **2** | **t0.2 x w60** |

As given in Table 2, in comparative example and examples 1 to 3, a hard aluminum foil with a thickness of 0.10 to 0.12 mm was used as the intermediate layer material 3, and a kraft paper with a thickness of 0.2 mm was used as the inner and outer layer materials 2 and 4. The apparent thickness T, which is the vertical width of the concave and convex portions 5 and 6 of the energy absorber 1, was 2.0 to 3.0 mm. The test results are shown in FIG. 4. Comparative example having a small apparent thickness T showed a linear curve, showing that the deformation amount was approximately proportional to the load. Examples 1 to 3 showed a substantially rectangular shape. Example 1 having the largest apparent thickness T showed a rectangular shape such that the deformation amount was small from the early stage at high loads, and when a load higher than a fixed value was applied, the deformation amount increased suddenly. Examples 2 and 3 showed better rectangular shape with increasing apparent thickness T.

The reason why the energy absorber 1 formed with the concave and convex portions 5 and 6 absorbs a larger amount of energy than the ordinary pipe is thought to be that not only plastic deformation occurs in the radial direction but also plastic deformation occurs in the axial direction of the pipe as well due to the stretch of the concave and convex portions 5 and 6.

Also, the reason why the energy absorber having a larger apparent thickness T absorbs higher impact energy is thought to be that when the shapes of the concave and convex portions 5 and 6 collapse, the deformation amount of absorber having a larger vertical width of the concave and convex portions is larger than that of absorber having a smaller vertical width of the concave and convex portions, or the deformation amount in the axial direction is large, by which a larger amount of energy is absorbed. Also, it is thought that the increase in thickness of the intermediate layer material 3 contributes to absorbing higher energy. Thus, the energy absorber 1 can absorb high energy even though it has a small diameter.

In addition to the above-described dynamic load characteristic test, a static load characteristic test was conducted. The results showed that if the energy absorber has the same shape, higher impact energy is absorbed at a higher load in the dynamic load characteristic test.

Although a detailed explanation is omitted, it was found that the energy absorber using two band-shaped aluminum foils as the intermediate layer material 3 absorbs a larger amount of energy than the energy absorber using one aluminum foil with a thickness equal to the total thickness of the two foils.

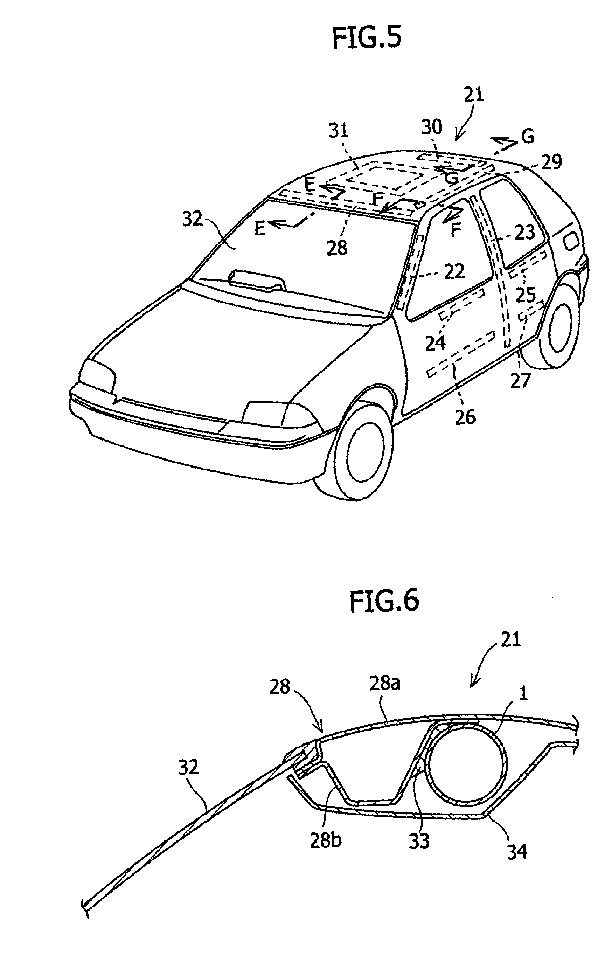

As described above, the impact energy absorber 1 absorbs or relaxes impact energy when an impact force is applied to a vehicle body at the time of collision of motor vehicle. As shown in FIG. 5, the energy absorber 1 may be disposed in a front pillar 22, center pillar 23, front and rear door shoulder portions 24 and 25, front and rear door lower portions 26 and 27, front roof rail portion 28, side roof rail portion 29, rear header rail portion 30, and the like of a vehicle body 21. If a sliding roof is installed, the energy absorber may be disposed around the sliding roof 31.

The shape of the impact energy absorber 1, which is preferable as the impact energy absorber used for a motor vehicle is as follows: the outside diameter D is 20 to 30 mm, the pitch p from the valley of the concave portion 5 to the valley of the adjacent concave portion 5 is 1.5 to 1.7 mm, and the vertical width (apparent thickness) T of the concave and convex portions 5 and 6 is 2.3 to 3.0 mm.

As the intermediate layer material 3, a band-shaped foil with a thickness of 0.1 to 0.12 mm and a width of 28 to 35 mm is used. The number of band-shaped foils for the intermediate layer material 3 is two or three lapped on each other. For the inner layer material 2 and the outer layer material 4, a kraft paper with a thickness of 0.2 mm and a width of 48 to 60 mm is used.

The preferred shape of the impact energy absorber 1 is given in Table 3.

**Table 3**

| **Size (outside diameter)** | **Corrugate pitch** | **Apparent tube thickness (T)** | **Al foil** | **Number of Al foils** | **Kraft paper** |
|---|---|---|---|---|---|
| **Ø20 - Ø30** | **1.5mm - 1.7mm** **(58 to 66 peaks / L100)** | **2.3mm - 3.0mm** | **t0.10mm - t0.12mm** **w28mm-w35mm** | **2 to 3** | **t0.2mm** **w48mm - w60mm** |

Also, the shape of the impact energy absorber 1, which is optimal as the impact energy absorber used for a motor vehicle is as follows: the outside diameter D is 23 to 26 mm, the pitch p from the valley of the concave portion 5 to the valley of the adjacent concave portion 5 is 1.5 to 1.6 mm, and the vertical width (apparent thickness) T of the concave and convex portions 5 and 6 is 2.7 to 2.9 mm.

As the intermediate layer material 3, a band-shaped foil with a thickness of 0.1 to 0.12 mm and a width of 35 mm is used. The number of band-shaped foils for the intermediate layer material 3 is two lapped on each other. For the inner layer material 2 and the outer layer material 4, a kraft paper with a thickness of 0.2 mm and a width of 60 mm is used.

The optimum shape of the impact energy absorber 1 for a motor vehicle is given in Table 4.

**Table 4**

| **Size (outside diameter)** | **Corrugate pitch** | **Apparent tube thickness (T)** | **Al foil** | **Number of Al foils** | **Kraft paper** |
|---|---|---|---|---|---|
| **Ø23 - Ø26** | **1.5mm - 1.6mm** **(62 to 66 peaks / L100)** | **2.7mm - 2.9mm** | **t0.10mm - t0.12mm** **w35mm** | **2** | **t0.2mm** **w60mm** |

FIGS. 6 to 8 show states in which the energy absorber : is actually disposed in the vehicle body 21 of a motor vehicle.

As shown in FIG. 6, the front roof rail portion 28 is provided above a windshield glass 32 of the vehicle body 21, and the front roof rail portion 28 forms a closed cross section by means of a roof outer panel 28a and a roof inner panel 28b. The impact energy absorber 1 is disposed on the rear side of this closed cross section.

The energy absorber 1 can be bonded directly to the inner panel 28b easily with an adhesive 33. In installation, a sponge-form cushioning material may be installed windingly around the energy absorber 1. Since the energy absorber 1 is flexible, it can be installed to a curved portion. The energy absorber 1 is hidden by an interior panel 34 that covers the roof on the cabin side.

If the energy absorber 1 is disposed between the interior panel 34 and the inner panel 28b in this manner, when the passenger's forehead hits the front roof rail portion 28, the energy absorber 1 is subjected to plastic deformation, by which impact energy can be absorbed. Also, since the energy absorber 1 has a circular cross section, it has a high directional property and hence can absorb sufficient impact energy over a wide angle range.

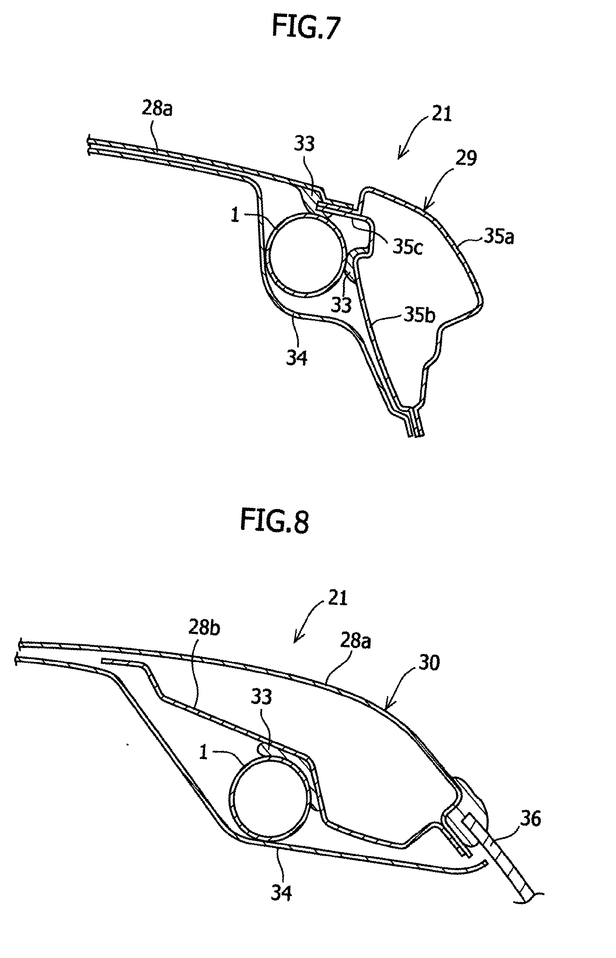

FIG. 7 shows a state in which the impact energy absorber 1 is provided in the side roof rail portion 29 of the vehicle body 21.

As shown in FIG. 7, the side roof rail portion 29 is provided at the side of the ceiling portion of the vehicle body 21, and forms a closed cross section by means of a side outer panel 35a and a side inner panel 35b. Flanges 35c formed at the upper ends of these panels 35a and 35b are joined to the roof outer panel 28a. The impact energy absorber 1 is disposed on the cabin side of this closed cross section. The energy absorber 1 is bonded directly to the roof outer panel 28a and the side inner panel 35b with the adhesive 33. The energy absorber 1 is hidden by the interior panel 34 that covers the roof on the cabin side.

When the side of the head of the passenger hits the side roof rail portion 29, the energy absorber 1 is subjected to plastic deformation, by which impact energy can be absorbed.

As shown in FIG. 8, the rear header rail portion 30 is provided above a rear glass 36 of the vehicle body 21, and the rear header rail portion 30 forms a closed cross section by means of the roof outer panel 28a and the roof inner panel 28b. The impact energy absorber 1 is disposed on the front side of this closed cross section. The energy absorber 1 can be bonded directly to the inner panel 28b with the adhesive 33. The energy absorber 1 is hidden by the interior panel 34 that covers the roof on the cabin side.

When the back of the head of the passenger hits the rear header rail portion 30, the energy absorber 1 is subjected to plastic deformation, by which impact energy can be absorbed.

In addition, the energy absorber 1 can be disposed in the front pillar 22, center pillar 23, front and rear door shoulder portions 24 and 25, and front and rear door lower portions 26 and 27, and around the sliding roof 31 of the vehicle body 21 by almost the same way.

As described above, for the energy absorber 1 having a circular cross section in accordance with the embodiment of the present invention, when an impact force is applied to the vehicle body 21, the energy absorber 1 is subjected to plastic deformation, by which impact energy is absorbed, and hence the passenger's burden of shock can be alleviated.

Also, the cost can be reduced significantly because there is no need for forming the cross section into a rectangular shape unlike the conventional rectangular energy absorber 1.

The above is a description of an embodiment of the present invention. Needless to say, the present invention is not limited to the above-described embodiment, and various changes and modifications can be made based on the technical concept of the present invention.

For example, according to the above-described embodiment, the energy absorber 1 is disposed at positions shown in FIG. 5. However, the installation position of the energy absorber 1 is not limited to these positions, and the energy absorber 1 can be disposed, for example, in an apron side panel and front panel of an engine room to achieve the same effect. In such a case, an energy absorber that is harder and can absorb higher impact energy than the impact energy absorber 1 disposed in the cabin is used. Also, although the energy absorber 1 is installed with an adhesive in the above-described embodiment, the energy absorber 1 may be fixed to the panel by installing clips on the energy absorber 1, or may be installed by a clip band.

Also, although the impact energy absorber 1 is formed with the concave and convex portions 5 and 6 around entire circumference over the total length in the above-described embodiment, the concave and convex portions 5 and 6 may be formed with a clearance being provided partially.

Further, the impact energy absorber 1 can be not only used for a motor vehicle but also for a protective barrier against motor vehicle on a road, which is other than the vehicle body of motor vehicle.

As described above, the impact energy absorber in accordance with the present invention is a circular pipe formed by lapping band-shaped materials in a spiral form. In the flexible impact energy absorber formed with concave and convex portions in the circumferential portion in a spiral or annular form, the pipe includes an aluminum band material with a thickness of 0.07 to 0.12 mm, the vertical width of the concave and convex portions is 2.0 to 3.2 mm, and the pitch of the concave and convex portions is 1.4 to 2.0 mm. By this construction, energy is absorbed by plastic deformation of the flexible pipe. Thereby, plastic deformation such that the deformation amount is small at high loads from the early stage and when a load higher than a fixed value is applied, the deformation amount increases suddenly (see FIG. 4) can be realized. This performance cannot be obtained by the conventional circular pipe. Also, the cost can be reduced because the pipe need not be formed from a circular cross section to a rectangular cross section unlike the conventional energy absorber. Because of its flexibility, the energy absorber in accordance with the present invention can be used in a curved portion.

## Claims

1. An impact energy absorber having flexibility, which is a circular pipe formed by lapping band-shaped materials in a spiral form and formed with concave and convex portions in a circumferential portion in a spiral or annular form, said pipe including an aluminum band material with a thickness of 0.07 to 0.12 mm, the vertical width of said concave and convex portions being 2.0 to 3.2 mm, and the pitch of said concave and convex portions being 1.4 to 2.0 mm, to absorb energy by plastic deformation of said flexible pipe.

2. An impact energy absorber having flexibility, which is a circular pipe formed by lapping band-shaped materials in a spiral form and formed with concave and convex portions in a circumferential portion in a spiral or annular form, and is disposed between a body panel and an interior member of a motor vehicle, said pipe including an aluminum band material with a thickness of 0.07 to 0.12 mm, the vertical width of said concave and convex portions being 2.0 to 3.2 mm, and the pitch of said concave and convex portions being 1.4 to 2.0 mm, to absorb energy by plastic deformation of said flexible pipe.

3. An impact energy absorber according to claim 1 or 2, wherein said flexible pipe is formed by lapping a kraft paper on the outside and inside of a band-shaped aluminum foil and by winding these materials.

4. An impact energy absorber according to claim 3, wherein said pipe includes an aluminum band material with a thickness of 0.10 to 0.12 mm, the vertical width of said concave and convex portions being 2.3 to 3.2 mm, the pitch of said concave and convex portions being 1.5 to 1.7 mm, and the outside diameter being 20 to 30 mm, to absorb energy by plastic deformation of said flexible pipe.
